# EUROPÄISCHE PATENTSCHRIFT

(11) **EP 2 571 917 B1**
(45) Veröffentlichungstag und Bekanntmachung des Hinweises auf die Patenterteilung: **07.12.2016**
(21) Anmeldenummer: 11721758.8
(22) Anmeldetag: 18.05.2011
(51) Int. Cl.: C08G 59/00, C08G 59/06, C08G 59/40, C08G 63/00

(54) **SEMICARBAZONE ALS BESCHLEUNIGER ZUR HÄRTUNG VON EPOXIDHARZEN**
SEMICARBAZONES AS ACCELERATORS FOR CURING EPOXY RESINS
SEMI-CARBAZONES EN TANT QU'ACCÉLÉRATEURS POUR LE DURCISSEMENT DE RÉSINES ÉPOXYDE

(30) Priorität: 18.05.2010 DE 102010020882
(43) Veröffentlichungstag der Anmeldung: 27.03.2013
(73) Patentinhaber: AlzChem AG, 83308 Trostberg (DE)
(72) Erfinder: HITZLER, Martin, 78244 Gottmadingen (DE); BRANDL, Monika, 83342 Tacherting (DE); GRUBER, Ansgar, 83308 Trostberg (DE)
(74) Vertreter: Weickmann & Weickmann PartmbB
(86) Internationale Anmeldenummer: PCT/EP2011/058042
(87) Internationale Veröffentlichungsnummer: WO 2011/144659

(56) Entgegenhaltungen:
- DE-A1- 10 324 486
- GREGORY W. ADAMS ET AL: "Do deprotonated semicarbazones undergo the negative-ion Beckmann rearrangement in the gas phase?", RAPID COMMUNICATIONS IN MASS SPECTROMETRY, Bd. 4, Nr. 8, 1. August 1990 (1990-08-01), Seiten 275-276, XP55004378, ISSN: 0951-4198, DOI: 10.1002/rcm.1290040802 in der Anmeldung erwähnt
- HADZI ET AL.: "The NH stretching band and the molecular configuration of azyl hydrazones and semicarbazones", SPECTROCHIMICA ACTA PART A: MOLECULAR SPECTROSCOPY, Bd. 23, Nr. 3, 1. März 1967 (1967-03-01), Seiten 571-577, XP000002656490, ISSN: 1386-1425 in der Anmeldung erwähnt
- PANDEYA ET AL.: "SYNTHESIS AND BIOLOGICAL ACTIVITY OF SUBSTITUTED ARYL SEMICARBAZONES", ACTA CIENCIA INDICA, CHEMISTRY, Bd. 33, Nr. 1, 1. Januar 2007 (2007-01-01) , Seiten 85-92, XP000002656580, ISSN: 0253-7338

## Beschreibung

Gegenstand der vorliegenden Erfindung ist die Verwendung von Semicarbazonen als latente Beschleuniger zur Härtung von Epoxidharz-Zusammensetzungen mittels hitzeaktivierbarer Härter wie bspw. Amine, Amide, Guanidine, Biguanide, Carbonsäureanhydride oder Polyphenole.

### Zur Härtung von Epoxidharzen

Die Verwendung von duroplastischen Epoxidharzen ist aufgrund ihrer guten Chemikalienbeständigkeit, ihrer sehr guten thermischen und dynamischmechanischen Eigenschaften sowie ihres hohen elektrischen Isolationsvermögens weit verbreitet. Sie zeigen überdies eine gute Haftung auf vielen Substraten. Aufgrund dieser Eigenschaften dienen sie bevorzugt als Matrix mit geringer Schwindung für Faserverbundwerkstoffe (Composites), die als strukturelle Elemente bei gleichzeitig geringem Gewicht eingesetzt werden. Darüber hinaus findet man Epoxidharze vielfach als Bestandteil von Gießharzen, Elektrolaminaten, Strukturklebstoffen, Pulverlacken und Vergussmassen (vgl. G. W. Ehrenstein, Faserverbund-Kunststoffe, 2006, 2. Auflage, Carl Hanser Verlag, München, Seite 63 - 68; und M. Reyne, Composite Solutions, 2006, JEC Publications, Seite 31 - 37).

Die Härtung von Epoxidharzen verläuft nach unterschiedlichen Mechanismen. Neben der Härtung mit Polyphenolen oder Cabonsäureanhydriden wird häufig die Härtung mit Aminen oder Amiden durchgeführt. Zu diesem Zweck wird die stöchiometrische Menge an Wasserstoffatomen, wie sie z. B. bifunktionelle Amine oder Amide liefern, zugesetzt. In diesem Zusammenhang sei auf das Kapitel 2 "Curing Agents for Epoxy resins" in "Chemistry and Technology of Epoxy Resins" von Bryan Ellis, erschienen 1993 im Verlag Blackie Academic & Professional, verwiesen. Hierin wird beschrieben, dass die Vernetzung vielfach mittels aromatischer, aliphatischer oder cycloaliphatischer Amine, Polyamide, Polyamidoamine, Polyetheramine, Mannichbasen, Anhydride oder Polyphenole (Phenol-Novolacke) durchgeführt wird. Aufgrund der zumeist hohen Reaktivität und damit niedrigen Topfzeit werden derartige Epoxidharz-Härter-Zusammensetzungen häufig zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. In diesem Zusammenhang bedeutet "latent", dass eine Mischung der Einzelkomponenten unter definierten Lagerbedingungen und Lagerzeiten stabil vorliegt und erst nach einer meist thermischen Aktivierung schnell aushärtet (H. Sanftenberg, M. Fedke Angew. Makrom. Chem. 1995, 225, 99 - 107).

Einkomponentige, heißhärtende Mischungen sind hingegen gebrauchsfähig fertig vorkonfektioniert, wobei Mischungsfehler der Einzelkomponenten bei Gebrauch vor Ort ausgeschlossen sind. Voraussetzung dafür bilden latente Härtersysteme, welche bei Raumtemperatur stabil (lagerfähig) sind, jedoch unter Erwärmung bereitwillig ausreagieren. Für solche einkomponentigen Epoxidharz-Formulierungen ist bspw. Dicyandiamid (Dicy) ein besonders geeigneter und auch kostengünstiger Härter. Unter Umgebungsbedingungen können entsprechende Harz-Härter-Mischungen bis zu sechs (6) Monaten gebrauchsfähig gelagert werden. Begründet wird diese Eigenschaft vor allem durch die Unlöslichkeit von Dicy in Epoxidharzen bei Umgebungstemperatur (Bryan Ellis, Chemistry and Technology of Epoxy Resins, 1993, Verlag Blackie Academic & Professional, Seite 49). Allerdings benötigen derartige Systeme aufgrund der ausgeprägten Reaktionsträgheit von Dicy lange Härtungszeiten bei hohen Temperaturen (R. Lopez, 1966, US 3,391,113; G. Ott, 1949, US 2,637,715 B1; J. v. Seyerl, 1984, EP 0 148 365). Zur Herabsetzung der Härtungstemperaturen können in Kombination mit dem Dicyandiamid-Härter Beschleuniger eingesetzt werden. Verbindungen, welche diese Eigenschaften aufweisen, sind u. a. Urone (Th. Güthner, B. Hammer J. Appl. Polym. Sci., 1993, 50, 1453 - 1459; Brockmann et al. J. Adhesion & Adhesives, 2000, 20, 333 - 340 ; Poisson et al. J. Appl. Polym. Sci., 1998, 69, 2487 - 2497) oder Imidazole (GB 1 050 679; Ricciardi et al. J. Appl. Polym. Sci., 1983, 21, 1475 - 1490). Während für Uron-Systeme außergewöhnlich lange Latenzzeiten beschrieben werden, besitzen Imidazol-Harzformulierungen mit oder ohne Dicyandiamid i. A. eine geringe Topfzeit von lediglich einigen Stunden (Bryan Ellis, Chemistry and Technology of Epoxy Resins, 1993, Verlag Blackie Academic & Professional, Seite 58 - 60). Beispiele für die Anwendung von Uronen in lagerstabilen, latent härtenden 1 K-(Einkomponenten)-Epoxidharz-Zusammensetzungen werden in den Patentdokumenten US 3,562,215, US 3,956,237, GB 1,153,639 A1, GB 1,293,142 A1, US 3,386,956, US 6,231,959 sowie DE 103 24 486 A1 beschrieben. Allerdings sind Urone zumeist Feststoffe mit geringer Löslichkeit in den gängigen organischen Lösungsmitteln oder Wasser. Zudem enthalten viele der derzeit kommerziell erhältlichen Produkte substituierte Aromaten, die oftmals wiederum die Halogene Chlor oder Fluor tragen. Beispiele hierfür sind u. a. Monuron, Diuron, Chlortoluron oder Fluometuron. Die zumeist lang bekannten Produkte sind nach heutiger Beurteilung sowohl toxikologisch als auch nach den Gesichtspunkten der Arbeitsicherheit bedenklich.

Dieser Arbeit lag daher die Aufgabe zugrunde, latente Beschleuniger für die Herstellung von lagerstabilen, latent härtenden 1 K-Epoxidharz-Zusammensetzungen bereit zu stellen, welche die Nachteile nach dem beschriebenen Stand der Technik nicht mehr aufweisen. Überraschend konnte die gestellte Aufgabe durch den Einsatz der nachfolgend beschriebenen Substanzklasse der Semicarbazone gelöst werden.

Dabei hat sich nun herausgestellt, dass Semicarbazone gemäß Formel (I) besonders gut als Härtungsbeschleuniger für Epoxidharz-Zusammensetzungen geeignet sind, insbesondere für Epoxidharz-Zusammensetzungen, die einen oder mehrere hitzeaktivierbare Härter umfassen, wobei die Semicarbazone folgende Struktur aufweisen: 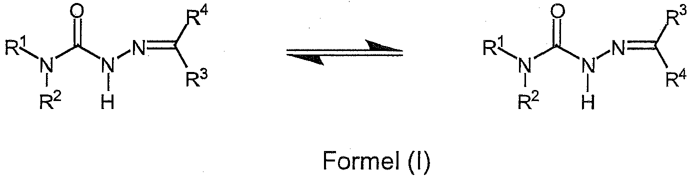 wobei
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl,
R³, R⁴ = gleichzeitig oder unabhängig voneinander H, verzweigter oder linearer Alkyl-Rest, Cycloalkyl-Rest, Alkylaryl-Rest, Aryl-Rest, Heteroaryl-Rest oder CN;
oder
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl-Rest,
R³ und R⁴ = Alkylen mit -(CH₂)ₙ- und 2 ≤ n ≤ 11
bedeuten.

Besonders bevorzugt sind hierbei Semicarbazone, die folgende Substituenten R¹ bis R⁴ aufweisen:
R¹ = Methyl, Ethyl, Benzyl oder Phenyl,
R² = H, Methyl, Ethyl, Benzyl oder Phenyl,
R³, R⁴ = gleichzeitig oder unabhängig voneinander H, Methyl, Ethyl, Propyl, Isopropyl, Butyl, Isobutyl, Benzyl oder Phenyl,
oder
R¹ = Methyl, Ethyl, Benzyl oder Phenyl,
R² = H, Methyl, Ethyl, Benzyl oder Phenyl,
R³ und R⁴ = Alkylen mit -(CH₂)ₙ- und 2 ≤ n ≤ 6.

Diese Semicarbazone weisen eine hohe Latenz in 1 K-Epoxidharz-Zusammensetzungen auf.

Erfindungsgemäß werden die Semicarbazone als Härtungsbeschleuniger und nicht als Härter selbst eingesetzt. Dies bedeutet, dass durch Zugabe der Semicarbazone die durch einen hitzeaktivierbaren Härter bewirkte Härtung beschleunigt wird. Diese Beschleunigung ist insbesondere latent, das bedeutet, dass die beschleunigende Wirkung der Semicarbazone erst bei Aktivierung, insbesondere thermischer Aktivierung effektiv wird.

### Semicarbazide und Semicarbazone

Semicarbazone der allgemeinen Formel (I) sind in der Literatur eine bisher wenig beschriebene Substanzklasse.

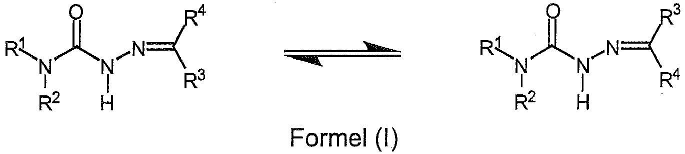

Adams und Bowie (Rapid Communications in Mass Spectromerty, 1990, 4(8), 275 - 6) untersuchten die stoßinduzierte Fragmentierung von Aceton- (R¹=R²= R³=R⁴=Me) und Acetophenon-4,4-dimethylsemicarbazon (R¹=R²=R³=Me, R⁴= Ph) im Massenspektrometer. Hadzi und Jan (J. Spectrochimica Acta, Part A: Molecular and Biomolecular Spectroscopy, 1967, 23(3), 571 - 7) gingen der Frage der Molekülkonfiguration am Beispiel der 4,4-Diethyl-Dereivate nach (R¹=R²=Et, R³=R⁴=Me und R¹=R²=Et, R³=Me, R⁴=Ph). Einige carbo- sowie heterocyclisch substituierte Semicarbazone wurden z.B. von CoCENSYS INC. (WO 98/47869) oder der Universität Wien (J. lnorg. Chem. 2007, 101(11 - 12), 1946-1957) in Bezug auf mögliche pharmazeutische Wirkungen untersucht. Andere Veröffentlichungen beschreiben eine pestizide (US 4,344,893 A) oder auch wachstumsregulierende Wirkung (Biologizace a Chemizace Vyzivy Zvirat 1977, 13(4), 357 - 74). Darüber hinaus veröffentliche Glöckler 1994 eine Arbeit (Zur Chemie der 1,3,4-Oxadiazoliumsalze, Wissenschaftliche Arbeit im Fach Chemie an der Universität Konstanz, Juni 1994), in der er die Herstellung und Charakterisierung einiger 4,4-Dimethylsemicarbazone (I) ausgehend vom 4,4-Dimethylsemicarbazid (II) eingehend studierte. Hierin genannt wurden bspw. die Derivate Dicyclopropylketon-, Cyclopropylphenylketon-, Acetophenon-, Aceton-, Benzophenon- oder Cyclopentanon-4,4-dimethylsemicarbazon.

Der synthetische Zugang zum 4,4-Dimethylsemicarbazid (II) als auch zum 4,4-Diethylsemicarbazid (III) gelingt über literaturbekannte Verfahren wie sie z. B. von C. Vogelesang (Rec. Trav. Chim. 1943, 62, 5) oder in WO 98/47869 veröffentlicht sind.

Analog können weitere Semicarbazide durch Umsetzung von Hydrazin mit entsprechenden Carbamoylchloriden erhalten werden. Die somit erhaltenen Semicarbazide können in einer nächsten Stufe durch Reaktion mit entsprechenden Ketonen in die gewünschten Semicarbazone gemäß Formel (I) überführt werden. (vgl. auch Glöckler (Zur Chemie der 1,3,4-Oxadiazoliumsalze, Wissenschaftliche Arbeit im Fach Chemie an der Universität Konstanz, Juni 1994))**.**

Keine Erwähnung finden Semicarbazone der Zusammensetzung (I) in der Literatur als Härter oder Beschleuniger zur Vernetzung von Epoxidharzen.

Überraschenderweise wurde weiterhin gefunden, dass sich die erfindungsgemäßen Verbindungen gemäß Formel (I) bevorzugt in Kombination mit hitzeaktivierbaren Härtern wie bspw. Amine, Amide, Guanidine, Biguanide, Carbonsäureanhydride oder Polyphenole hervorragend als Härtungsbeschleuniger zur Härtung von Epoxidharz-Zusammensetzungen eignen. Entsprechend der vorliegenden Erfindung werden hierfür als Härtungsbeschleuniger Semicarbazone der allgemeinen Formel (I) eingesetzt, 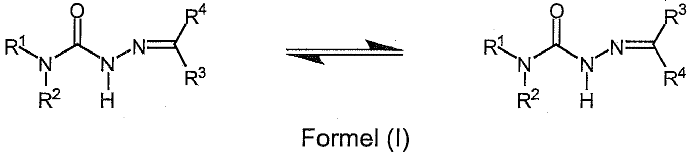 wobei
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl,
R³, R⁴ = gleichzeitig oder unabhängig voneinander H, verzweigter oder linearer Alkyl-Rest, Cycloalkyl-Rest, Alkylaryl-Rest, Aryl-Rest, Heteroaryl-Rest oder CN;
oder
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, , Aryl-Rest oder Alkylaryl-Rest,
R³ und R⁴ = Alkylen mit -(CH₂)ₙ- und 2 ≤ n ≤ 11
bedeuten.

Besonders bevorzugt sind hierbei Semicarbazone, die folgende Substituenten R¹ bis R⁴ aufweisen:
R¹ = Methyl, Ethyl, Benzyl oder Phenyl,
R² = H, Methyl, Ethyl, Benzyl oder Phenyl,
R³, R⁴ = gleichzeitig oder unabhängig voneinander H, Methyl, Ethyl, Propyl, Isopropyl, Butyl, Isobutyl, Benzyl oder Phenyl,
oder
R¹ = Methyl, Ethyl, Benzyl oder Phenyl,
R² = H, Methyl, Ethyl, Benzyl oder Phenyl,
R³ und R⁴ = Alkylen mit -(CH₂)ₙ- und 2 ≤ n ≤ 6.

Die Substituenten R¹ bis R⁴ sind breit variierbar. Weiterhin bevorzugte Reste R¹ und R² sind Methyl, Ethyl und Benzyl. Das Substitutionsmuster für R³ und R⁴ wird durch das in der Synthese eingesetzte Aldehyd oder Keton bestimmt (G.W. Adams, J.H. Bowie Rapid Communications in Mass Spectromerty, 1990, 4(8), 275 - 6; D.J. Hadzi J. Spectrochimica Acta (A) 1967, 23(3), 571 - 7; St. Glöckler, Zur Chemie der 1,3,4-Oxadiazoliumsalze, Wissenschaftliche Arbeit im Fach Chemie an der Universität Konstanz, Juni 1994). Insbesondere kommen Acetaldehyd, Benzaldehyd, Salicylaldehyd, Zimtaldehyd, Anisaldehyd, Aceton, Methylethylketon, Methylpropylketon, Methylisobutylketon, Cyclopentanon, Cyclohexanon, Diethylketon, Dicyclopropylketon, Cyclopropylphenylketon, Acetophenon, Benzophenon, 3-Indolylmethylketon, Phenyl-2-pyridylketon, Methyl-2-pyridylketon oder 1-Cyan-2,2-dimethylpropanon zum Einsatz.

Erfindungsgemäß bevorzugt Semicarbazone, in denen R¹ Methyl, Ethyl, Benzyl oder Phenyl darstellt. Weiterhin erfindungsgemäß bevorzugt sind Semicarbazone, in denen R² H, Methyl, Ethyl, Benzyl oder Phenyl, insbesondere Methyl, Ethyl, Benzyl oder Phenyl darstellt.

Weiterhin bevorzugt sind Semicarbazone, in denen R³ und R⁴ unabhängig voneinander H, C₁-C₄ Alkyl, Benzyl oder Phenyl darstellen oder R₃ und R₄ zusammen ein Alkylen mit -(CH2)ₙ- bilden, worin 2 ≤ n ≤ 6.

Strukturell können die Semicarbazone (I) sowohl als geometrische Isomere ((Z)-, (E)-Isomere) oder aber in den jeweiligen tautomeren Formen (Keto-Enol-Tautomere) vorliegen. In Abhängigkeit der Reste R¹ bis R⁴ erhält man die Verbindungen (I) dabei in fester, halbfester oder in flüssig-öliger Form. Das Substitutionsmuster bestimmt auch die Löslichkeit der Semicarbazone (I) in Lösungsmitteln oder in Epoxidharzen.

Beispielhaft und nicht limitierend für die erfindungsgemäßen Semicarbazone der allgemeinen Formel (I) werden als bevorzugte Vertreter Aceton-4,4-dimethylsemicarbazon (Ac-DMS), Methylethylketon-4,4-dimethylsemicarbazon (MEK-DMS), Dicyclopropylketon-4,4-dimethylsemicarbazon (DCyPr-DMS), Methylisobutylketon-4,4-dimethylsemicarbazon (MIBK-DMS), Cyclopentanon-4,4-dimethylsemicarbazon (CyPn-DMS), Cyclohexanon-4,4-dimethylsemicarbazon (CyHx-DMS), Acetophenon-4,4-dimethylsemicarbazon (AcPh-DMS), Cyclopropylphenylketon-4,4-dimethylsemicarbazon (CyPrPh-DMS), Benzophenon-4,4-dimethylsemicarbazon (BzPh-DMS), Aceton-4,4-diethylsemicarbazon (Ac-DES), Cyclopentanon-4,4-diethylsemicarbazon (CyPn-DES) oder Acetophenon-4,4-diethylsemicarbazon (AcPh-DES), eingesetzt.

Insbesondere kann als hitzeaktivierbarer Härter Dicyandiamid eingesetzt werden.

Gemäß einem weiteren Aspekt der vorliegenden Erfindung ist dabei vorgesehen, dass das Semicarbazon oder Mischungen der Semicarbazone in einer Menge von 0,1 bis 15 Gew.-% bezogen auf die Epoxidharz-Zusammensetzung eingesetzt werden, bevorzugt in einer Menge von 1 bis 10 Gew.-%. Alternativ oder ergänzend kann jedoch auch vorgesehen sein, dass das Semicarbazon oder Mischungen der Semicarbazone in einem Verhältnis von 0,1 bis 15 Teile bezogen auf 100 Teile Epoxidharz eingesetzt werden.

Im Hinblick auf die zu härtenden Epoxidharze unterliegt die vorliegende Erfindung keinerlei Beschränkung. Es kommen insbesondere sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolac-Harzen sowie auf Basis von Anilin oder substituierten Anilinen wie bspw. P-Aminophenol oder 4,4'-Diaminodiphenylmethane können durch Anwendung der erfindungsgemäßen Verbindungen der Formel (I) in Gegenwart von hitzeaktivierbaren Härtern besonders gut gehärtet werden.

Gemäß einem weiterführenden Aspekt ist damit ebenfalls eine Epoxidharz-Zusammensetzung Gegenstand der vorliegenden Erfindung. Diese Epoxidharz-Zusammensetzung umfasst
a) ein Epoxidharz mit mindestens einer reaktiven Epoxidgruppe,
b) mindestens einen hitzeaktivierbaren Härter
c) mindestens ein Semicarbazon der allgemeinen Formel (I) als Härtungsbeschleuniger 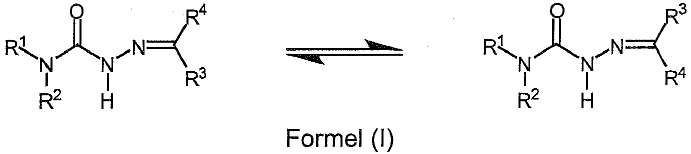 worin
   R¹ = verzweigter oder linearer Alkyl-Rest, Cycloalkyl-Rest, Aryl-Rest oder Alkylaryl-Rest,
   R² = H, verzweigter oder linearer Alkyl-Rest, Cycloalkyl-Rest, Aryl-Rest oder Alkylaryl,
   R³, R⁴= gleichzeitig oder unabhängig voneinander H, verzweigter oder linearer Alkyl-Rest, Cycloalkyl-Rest, Alkylaryl-Rest, Aryl-Rest, Heteroaryl-Rest oder CN;
   oder
   R¹ = verzweigter oder linearer Alkyl-Rest, Cycloalkyl-Rest, Aryl-Rest oder Alkylaryl-Rest,
   R² = H, verzweigter oder linearer Alkyl-Rest, Cycloalkyl-Rest, Aryl-Rest oder Alkylaryl-Rest,
   R³ und R⁴ = Alkylen mit -(CH₂)ₙ- und 2 ≤ n ≤ 11 bedeuten.

Besonders bevorzugt sind hierbei Epoxidharz-Zusammensetzungen, die ein Semicarbazon der allgemeinen Formel (I) mit folgenden Substituenten R¹ bis R⁴ aufweisen:
R¹ = Methyl, Ethyl, Benzyl oder Phenyl,
R² = H, Methyl, Ethyl, Benzyl oder Phenyl,
R³, R⁴ = gleichzeitig oder unabhängig voneinander H, Methyl, Ethyl, Propyl, Isopropyl, Butyl, Isobutyl, Benzyl oder Phenyl,
oder
R¹ = Methyl, Ethyl, Benzyl oder Phenyl,
R² = H, Methyl, Ethyl, Benzyl oder Phenyl,
R³ und R⁴ = Alkylen mit -(CH₂)ₙ- und 2 ≤ n ≤ 6.

Gemäß einer bevorzugten Ausführung der vorliegenden Erfindung ist hierbei vorgesehen, dass als hitzeaktivierbare Härter insbesondere Amine, Amide, Guanidine, Biguanidine, Carbonsäureanhydride oder Polyphenole eingesetzt werden.

Exemplarisch für die erfindungsgemäß eingesetzten, hitzeaktivierbaren Härter - und somit nicht limitierend - werden als bevorzugte Vertreter Biguanide wie bspw. ortho-Tolylbiguanid (OTB), Methylendianilin (MDA, DDM) aber auch der gesättigten Form para-Aminocyclohexylmethan (PACM) oder Derivate dieser Amine, 3,3'- oder 4,4'-Diaminodiphenylsulfon (DDS) oder Mischungen davon, Polyetheramine (Jeffamine), Dicyandiamid (DCD), Dihydrazide von Adipin- oder Sebazinsäure, Anhydride der Pyromellit-, Trimellit- oder Phthalsäure deren Derivate, die auch hydriert oder teilhydriert sein können, Phenol- oder Kresolnovolacke, genannt.

Die Zubereitung der Epoxidharz-Zusammensetzungen im Sinne der Erfindung erfolgt nach den bekannten fachmännischen Grundlagen. Hierzu werden in einem ersten Schritt Harz und Härter homogen vermischt. Dabei stellt der Härter bevorzugt die vernetzende Komponente dar und wird somit in der benötigten, stöchiometrischen Menge eingesetzt. Die Einsatzmenge hängt zumeist direkt vom Molekulargewicht der Härter-Verbindung ab und damit auch vom spezifischen HEW-Wert (Hydrogen Equivalent Weight). Dieser kann entweder dem Datenblatt des Herstellers entnommen werden oder lässt sich als Quotient darstellen, wobei das Molekulargewicht des Härters durch die Anzahl der reaktiven H-Funktionen geteilt wird. Zur stöchiometrischen Härtung von 100 Teilen Epoxidharz wird der Quotient aus dem HEW (Härter) und dem EEW (Harz) gebildet und mit 100 multipliziert. Den EEW-Wert (Epoxy Equivalent Weight) des Harzes erhält man aus dem Datenblatt des Herstellers.

In einem zweiten Schritt erfolgt die Zugabe der erfindungsgemäßen Beschleuniger (I), wobei die Abfolge der Mischungszubereitung aus Harz, Härter, Beschleuniger und evtl. weiteren Additiven für die Wirkung der Erfindung nicht bindend ist. Ebenso wenig sind die verwendeten Hilfsmittel für die Ausführung der Erfindung limitierend. Bevorzugte Wege zur homogenen Abmischung der Komponenten stellen bspw. Dissolver oder Kneter dar.

Die Menge der gemäß der Erfindung eingesetzten Beschleuniger (I) unterliegt keinen Beschränkungen. Bevorzugt werden auf 100 Teile Harz 0,01 bis 20 Teile Beschleuniger, vorzugsweise 0,1 bis 15 Teile, bevorzugt 0,1 bis 10 Teile und besonders bevorzugt 1 bis 5 Teile eingesetzt. Auch eine Kombination mehrerer Beschleuniger wird durch diese Erfindung mit abgedeckt.

Die Härtung der Epoxidharze mit Hilfe der erfindungsgemäß eingesetzten Verbindungen (I) erfolgt in der Regel bei Temperaturen von 60 bis 200 °C, vorzugsweise bei 80 bis 180 °C und insbesondere bei 100 bis 160 °C. Die Wahl der Härtungstemperatur ist abhängig von den jeweiligen Verarbeitungs- und Produktanforderungen und kann über die Formulierung vor allem durch Regulierung der Härtermengen sowie durch Zugabe von Additiven variiert werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Mirkowellen oder sonstiger Strahlen geschehen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden. So können z. B. die Auslösetemperaturen abhängig von der Zugabemenge weiter gesenkt oder aber die Gelzeiten und damit die Aushärtezeiten vorteilhaft den technischen Vorgaben und somit den speziellen Kundenbedürfnissen angepasst werden.

Additive zur Verbesserung der Verarbeitbarkeit der unausgehärteten Epoxidharz-Zusammensetzungen oder zur Anpassung der thermischmechanischen Eigenschaften der duroplastischen Produkte an das Anforderungsprofil umfassen bspw. Reaktivverdünner, Füllstoffe, Rheologieadditive wie Thixotropierungsmittel oder Dispergieradditive, Antibackmitel, Farbstoffe, Pigmente, Zähmodifikatoren oder Brandschutzadditive.

Keine Einschränkungen gelten auch in Bezug auf die physikalische Form sowohl der Harze als auch der Härter, Beschleuniger oder weiterer Additive. Insbesondere können pulverförmige Komponenten in mikronisierter oder aber in kristalliner Form Verwendung finden. Auch der Zusatz von Lösemittel kann in manchen Anwendungen von Vorteil sein. Beispiele für Lösemittel sind Wasser, verschiedene Ester von Glykolethern, aber auch Ketone wie Aceton, MEK, MIBK oder Lösungsmittel wie DMF, etc. Diese dienen entweder der Viskositätserniedrigung oder der Bereitung von gelösten Formulierungen. Beides ist bei der Imprägnierung von Verstärkungsfasern, wie sie bei der Herstellung von Faserverbundwerkstoffen eingesetzt werden, von großem Vorteil. Eine besonders bevorzugte Variante ist demnach der Einsatz von flüssigen oder in der Harzformulierung lösbaren Semicarbazonen (I).

Aufgrund der günstigen Anwendungseigenschaften der erfindungsgemäßen Beschleuniger sowie ihrer kostengünstigen Herstellung und einhergehend einem vorteilhaften Kosten-Nutzen-Verhältnis sind diese besonders gut für eine technische Anwendung geeignet.

Mit der vorliegenden Erfindung wird die Verwendung von Semicarbazonen der allgemeinen Formel (I) mit der für die Reste R¹, R², R³ und R⁴ genannten Bedeutungen in Epoxidharz-Zusammensetzungen beschrieben.

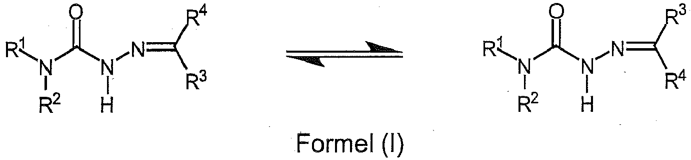

Diese Semicarbazone weisen eine hohe Latenz in Epoxidharz-Zusammensetzungen auf und sind damit hervorragend als latente Härtungsbeschleuniger für 1-K-Epoxidharz-Zusammensetzungen geeignet.

Die nachfolgenden Beispiele verdeutlichen die Vorteile der vorliegenden Erfindung.

### Beispiele

Nachfolgende Harz-, Härter- und Beschleunigerkomponenten wurden in den Beispielen zur Veranschaulichung der Erfindung eingesetzt:

**Epoxidharz:**

| Bezeichnung | Zeichen | EEW | CAS-Nr. |
|---|---|---|---|
| Bisphenol A-Flüssigharz¹⁾ | Epikote 828 | 182 - 187 | [25068-38-6] |
| | durchschnittliches Molekulargewicht <= 700 | | |

**Härter:**

| Bezeichnung | Zeichen | HEW | CAS-Nr. |
|---|---|---|---|
| Dicyandiamid (Cyanguanidin)²⁾ | DCD (Dicy) | 12 - 14 | [461-58-5] |

**Beschleuniger (Vergleich):**

| Bezeichnung | Zeichen | CAS-Nr. |
|---|---|---|
| Dyhard® UR500 (TDI-Uron)²⁾ | UR500 | [26604-41-1] |
| Dyhard® PI-FF (2-Phenylimidazol)²⁾ | PI-FF | [670-96-2] |

### Allgemeine Herstellung von Semicarbazonen gemäß Formel (I)

### a) Synthese der Semicarbazide

Der synthetische Zugang zum 4,4-Dimethylsemicarbazid (II) als auch zum 4,4-Diethylsemicarbazid (III) gelingt über literaturbekannte Verfahren wie sie z. B. von C. Vogelesang (Rec. Trav. Chim. 1943, 62, 5) oder in WO 98/47869 veröffentlicht sind. Exemplarisch nach dem Beispiel 26 der Patentschrift WO 98/47869 verdeutlicht, werden zur Herstellung von 4,4-Dimethylsemicarbazid (II) äquimolare Mengen Hydrazinhydrat und Dimethylcarbamoylchlorid in den Lösungsmitteln Ethanol und Diethylether unter Eisbadkühlung tropfenweise zur Reaktion gebracht und 1 Stunde unter Eisbadkühlung nachreagiert. Nach Filtration des ausgefallenen Feststoffs entsteht durch Aufkonzentration der Reaktionsmischung die Zielverbindung (II) als weißer, kristalliner Feststoff.

### b) Synthese der Semicarbazone

Im Folgenden werden die gemäß a) hergestellten Semicarbazide mit Ketonen zu den gewünschten Semicarbazonen umgesetzt.

Wiederum exemplarisch herausgegriffen sei die Verdeutlichung der allgemein anwendbaren Umsetzung der Semicarbazide (II) zu den erfindungsgemäßen Semicarbazonen (I) am Beispiel des Cylcopentanon-4,4-dimethylsemi-carbazons (R¹=R²=Me; R³ und R⁴ = -(CH₂)₄-). Nach Glöckler (Zur Chemie der 1,3,4-Oxadiazoliumsalze, Wissenschaftliche Arbeit im Fach Chemie an der Universität Konstanz, Juni 1994) wird hierzu Cyclopentanon im 5-fachen Überschuss mit dem Semicarbazid (II) in siedendem Ethanol zur Reaktion gebracht. Nach 45 min ist die Reaktion beendet und nach dem Abdampfen des Lösungsmittels und des überschüssigen Ketons erhält man durch Rühren des Rückstands unter eiskaltem Pentan ein farbloses bis leicht gelbliches Pulver. Die Struktur und Zusammensetzung wurde durch IR- und NMR (¹H, ¹³C)-spektroskopische Untersuchungen sowie durch CHN-Analyse bestätigt.

**Analog werden die obigen hierin genannten Semicarbazone hergestellt. Beschleuniger (erfindungsgemäß):**

| Bezeichnung | | | Zeichen | CAS-Nr. |
|---|---|---|---|---|
| **Aceton**-**4**,**4**-**dimethylsemicarbazon**^{**4**,**6**}) | | | | |
| | | | **Ac-DMS** | **[130652-43-6]** |
| C₆H₁₃N₃O (143,19) | ber. | C 50,33 % | H 9,15 % | N 29,35 % |
| | gef. | C 48,97 % | H 9,02 % | N 28,47 % |
| **Methylethylketon**-**4**,**4**-**dimethylsemicarbazon** | | | | |
| | | | **MEK-DMS** | **[keine CAS-Nr.]** |
| C₇H₁₅N₃O (157,21) | ber. | C 53,48 % | H 9,62 % | N 26,73 % |
| | gef. | C 53,88 % | H 9,70 % | N 25,48 % |
| **Methylisobutylketon**-**4**,**4**-**dimethylsemicarbazon** | | | | |
| | | | **MIBK-DMS** | **[keine CAS-Nr.]** |
| C₉H₁₉N₃O (185,27) | ber. | C 58,35 % | H 10,34 % | N 22,68 % |
| | gef. | C 57,71 % | H 10,76 % | N 22,30 % |
| **Cyclopentanon**-**4**,**4**-**dimethylsemicarbazon**^{**6**)} | | | | |
| | | | **CyPn-DMS** | **[keine CAS-Nr.]** |
| C₈H₁₅N₃O (169,22) | ber. | C 56,78 % | H 8,93 % | N 24,83 % |
| | gef. | C 56,72 % | H 8,96 % | N 24,83 % |
| **Acetophenon-4,4-dimethylsemicarbazon**^{4,6)} | | | | |
| | | | **AcPh-DMS** | **[17106-64-8]** |
| C₁₁H₁₅N₃O (205,26) | ber. | C 64,37 % | H 7,37 % | N 20,47 % |
| | gef. | C 64,18 % | H 7,39 % | N 19,71 % |
| **Cyclohexanon**-**4**,**4**-**dimethylsemicarbazon** | | | | |
| | | | **CyHx-DMS** | **[keine CAS-Nr.]** |
| C₉H₁₇N₃O (183,25) | ber. | C 58,99 % | H 9,35 % | N 22,93 % |
| | gef. | C 58,21 % | H 9,05 % | N 23,22 % |
| **Aceton**-**4**,**4**-**diethylsemicarbazon**^{**5**)} | | | | |
| | | | **Ac-DES** | **[14850-53-4]** |
| C₈H₁₇N₃O (171,24) | ber. | C 56,11% | H 10,01 % | N 24,54 % |
| | gef. | C 55,68 % | H 10,49 % | N 24,33 % |
| **Acetophenon**-**4**,**4**-**diethylsemicarbazon**^{**5**)} | | | | |
| | | | **AcPh-DES** | **[14850-67-0]** |
| C₁₃H₁₉N₃O (233,31) | ber. | C 66,92 % | H 8,21 % | N 18,01 % |
| | gef. | C 66,25 % | H 8,08 % | N 18,49 % |

### Herstellung und Herkunft von Harz, Härter und Beschleuniger:

1) Hexion Speciality Chemicals
2) AlzChem GmbH, Trostberg
3) Sigma-Aldrich Group (weitere zur Synthese benötigte Substanzen)
4) G.W. Adams, J.H. Bowie, Rapid Communications in Mass Spectromerty, 1990, 4(8), 275 - 6.
5) D.J. Hadzi, J. Spectrochimica Acta, Part A: Molecular and Biomolecular Spectroscopy, 1967, 23(3), 571-7.
6) St. Glöckler, Zur Chemie der 1,3,4-Oxadiazoliumsalze, Wissenschaftliche Arbeit im Fach Chemie an der Universität Konstanz, Juni 1994**.**

### Herstellung der Probe

Zur Bereitung der Harz-Härter-Formulierung wurden die Komponenten in den angegebenen Verhältnissen in eine Porzellanreibschale eingewogen und von Hand homogen durchmischt. Feststoffe wurden vorab in der Reibschale verrieben.

### Ermittlung der Gelzeit

Etwa 700 - 800 mg der frisch zubereiteten Probe wurden in ein Aluminiumtiegelchen eingewogen, welches in einen auf die angegebene Temperatur vortemperierten Heizblock eingeführt wurde (Start der Zeitnahme). Die Prüfung auf Gelierung geschah mittels eines Holzspießchens, welches in das flüssige Harz eingetaucht wurde. Ergab sich beim Herausziehen ein stabiler Faden (kein Abtropfen mehr), so wurde diese Zeit als Gelzeit definiert.

### Durchführung der dynamischen DSC-Messungen

Zur Bestimmung der DSC-Peak-Temperatur (DSC Peak T) wurde die Probe mit einer Heizrate von 10 K/min von 30 auf 250 °C aufgeheizt. Die DSC-Onset-Temperatur (DSC Onset T) wurde aus derselben Messung durch Anlegen der Tangente an den exothermen Reaktionspeak bestimmt. Für die Ermittlung der isothermen Reaktionszeit wurde eine zweite Probe in den auf die angegebene Temperatur aufgeheizten DSC-Ofen mittels Probengeber eingebracht und diese Temperatur für min. 40 min konstant gehalten. Die Lage des Härtungspeaks entsprach dem Zeitpunkt der maximal freiwerdenden Exothermie und wurde als isotherme Reaktionszeit definiert.

### Messung der Glasübergangstemperatur mittels DSC (End-Tg)

Für die Bestimmung der max. erreichbaren Glasübergangstemperatur (End-Tg) wurde die vorgelierte Probe aus der Gelzeitbestimmung herangezogen. Die Probe wurde durch Erhitzen auf 200 °C (DSC-Temperaturprogramm: 30 bis 200 °C, Heizrate 20 K/min) und 30 min Halten der Temperatur vollständig ausgehärtet. Nach dem Abkühlung auf 30 °C wurde die Probe mit einer Aufheizrate von 10 K/min erneut von 30 auf 200 °C aufgeheizt und aus der Heizkurve durch Anlegen der Tangente im Wendepunkt der größten Änderung der Wärmekapazität (ΔCp) der Tg bestimmt.

### Durchführung der Latenzexperimente

Zur Ermittlung der Latenz (Lagerstabilität) wurden ca. 10 g der Probe frisch bereitet und diese bei der angegebenen Temperatur in einem Ofen temperiert. Als Maß für die fortschreitende Vernetzung (Härtung) der Epoxidharzmasse wurde zum jeweiligen Messzeitpunkt die dyn. Viskosität einer Probe bei 25 °C in einem Kegel(1°)-Platte-Rheometer ermittelt.

Die Auswertung der Experimente geschah durch Auftragen des prozentualen Viskositätsanstiegs (%) über der Zeit in Stunden (h) oder Tagen (d) sowie Extrapolation der Einzeldaten mittels einer exponentiellen oder potenziellen mathematischen Funktion.

**Verwendete Analysengeräte**

| | | |
|---|---|---|
| Gelzeit | Heizblock | VLM 2.0 HT |
| DSC-Messungen | DSC-Gerät | Mettler-Toledo DSC 822 |
| Viskosität | Rheometer | Haake RheoStress 1 |

### Beispiel 1

### Gelzeit, dyn. DSC und End-Tg

Die Harzformulierungen der allg. Zusammensetzung
*Epikote 828 (100 Teile) : DCD (6,5 Teile) : Beschleuniger (x Teile)*
wurden entsprechend der Tabellen 1 a und 1 b wie eingangs beschrieben angefertigt und ausgetestet.

**Tabelle 1a: Gelzeit, dyn. DSC und End-Tg (nicht erfindungsgemäß)**

| Zusammensetzung | Beschleuniger (Teile) | Gelzeit bei 120°C [min : sek] | Gelzeit bei 140°C [min : sek] | DSC-Peak-Temperatur [°C] | End-Tg (DSC) [°C] |
|---|---|---|---|---|---|
| | | | | | |
| 1.01 | UR500 (1,0 Teile) | 12 : 40 | 04 : 00 | 150,2 | 150 |
| 1.02 | UR500 (3,0 Teile) | 07 : 30 | 02 : 45 | 143,4 | 134 |
| 1.03 | UR500 (5,0 Teile) | 05 : 50 | 02 : 25 | 140,3 | 126 |
| | | | | | |
| 1.04 | PI-FF (1,0 Teile) | 06 : 40 | --- | 143,5 | 165 |
| 1.05 | PI-FF (3,0 Teile) | 03 : 05 | --- | 130,7 | 154 |
| 1.06 | PI-FF (5,0 Teile) | 02 : 30 | 01 : 10 | 125,9 | 124 |
| | | | | | |
| 1.07 | ohne Beschleuniger | > 180 | > 60 | 199,6 | 167 |

**Tabelle 1 b: Gelzeit, dyn. DSC und End-Tg (erfindungsgemäß)**

| Zusammensetzung | Beschleuniger (Teile) | Gelzeit bei 120°C [min : sek] | Gelzeit bei 140°C [min : sek] | DSC-Peak-Temperatur [°C] | End-Tg (DSC) [°C] |
|---|---|---|---|---|---|
| | | | | | |
| 1.20 | Ac-DMS (1,0 Teile) | 12 : 10 | 03 : 20 | 148,9 | 149 |
| 1.21 | Ac-DMS (3,0 Teile) | 05 : 05 | 02:20 | 137,9 | 130 |
| 1.22 | Ac-DMS (5,0 Teile) | 04 : 10 | 01 : 55 | 133,8 | 122 |
| | | | | | |
| 1.23 | MEK-DMS (1,0 Teile) | 14 : 15 | 03 : 10 | 156,2 | 147 |
| 1.24 | MEK-DMS (3,0 Teile) | 05 : 55 | 02:45 | 140,2 | 132 |
| 1.25 | MEK-DMS (5,0 Teile) | 04 : 40 | 02 : 15 | 135,3 | 123 |
| | | | | | |
| 1.26 | MIBK-DMS (1,0 Teile) | 17 : 50 | 05 : 10 | 152,0 | 151 |
| 1.27 | MIBK-DMS (3,0 Teile) | 06 : 55 | 03 : 00 | 142,2 | 132 |
| 1.28 | MIBK-DMS (5,0 Teile) | 05 : 35 | 02 : 40 | 139,0 | 123 |
| | | | | | |
| 1.29 | CyPn-DMS (1,0 Teile) | 15 : 15 | 05 : 00 | 154,6 | 151 |
| 1.30 | CyPn-DMS (3,0 Teile) | 07 : 20 | 03:20 | 144,8 | 135 |
| 1.31 | CyPn-DMS (5,0 Teile) | 05 : 30 | 02 : 15 | 142,1 | 125 |
| | | | | | |
| 1.32 | CyHx-DMS (1,0 Teile) | 16 : 00 | 04 : 25 | 157,3 | 145 |
| 1.33 | CyHx-DMS (3,0 Teile) | 08 : 20 | 03 : 25 | 151,7 | 136 |
| 1.34 | CyHx-DMS (5,0 Teile) | 06 : 40 | 02 : 50 | 145,0 | 125 |
| | | | | | |
| 1.35 | AcPh-DMS (1,0 Teile) | 17 : 35 | 04 : 20 | 154,4 | 145 |
| 1.36 | AcPh-DMS (3,0 Teile) | 07 : 45 | 02 : 45 | 145,9 | 132 |
| 1.37 | AcPh-DMS (5,0 Teile) | 06 : 15 | 02 : 30 | 141,7 | 124 |
| | | | | | |
| 1.38 | Ac-DES (1,0 Teile) | - | 18 : 40 | 184,2 | 153 |
| 1.39 | Ac-DES (3,0 Teile) | - | 11 : 10 | 171,2 | 139 |
| 1.40 | Ac-DES (5,0 Teile) | - | 08 : 00 | 167,6 | 124 |
| | | | | | |
| 1.41 | AcPh-DES (1,0 Teile) | - | 21 : 15 | 185,9 | 144 |
| 1.42 | AcPh-DES (3,0 Teile) | - | 13 : 30 | 176,8 | 140 |
| 1.43 | AcPh-DES (5,0 Teile) | - | 12 : 00 | 172,4 | 128 |
| | | | | | |

Die beschleunigende Wirkung der erfindungsgemäßen Semicarbazone (I) in Verbindung mit dem Härter DCD wird in den Beispielen 1.20 - 1.43 im Vergleich zum Beispiel 1.07 deutlich. Ohne Beschleuniger wirkt der reaktionsträge Härter DCD in der oben beschriebenen Epoxidharzmatrix erst ab einer Temperatur von 199,6 °C (vgl. Beispiel 1.07). Bei dieser Temperatur erkennt man im DSC-Experiment anhand des exothermen Reaktionspeaks die Polymerisation zum duromeren Netzwerk. Fügt man der Epoxidharz-Härter-Mischung die erfindungsgemäßen Beschleuniger (I) hinzu, startet die Polymerisationsreaktion bei niedrigen Temperaturen. So ist beispielsweise für das Beispiel 1.22 eine Peak-Temperatur bei 133,8 °C zu verzeichnen. Dieser Befund gilt gleichermaßen für die Gelzeiten, die sich mit zunehmenden Anteil an Beschleuniger verkürzen. Ebenso lässt sich die Aktivität gegenüber einer Epoxidharz-Härter-Mischung über die Art der Substitution der Semicarbazone (I) steuern. Beispielhaft sei der Vergleich 1.20 - 1.22 mit 1.35 - 1.37 gebildet. Eine starke Auswirkung auf die katalytische Wirkung wird auch durch den Vergleich von 1.20 - 1.22 mit 1.38 - 1.40 verdeutlicht, wenn die Reste R¹ und R² variiert werden.

Im Vergleich dazu stehen kommerziell seit langem eingeführte und verfügbare Beschleuniger wie zum Beispiel Dyhard UR500 oder Dyhard PI-FF (Beispiele 1.01 - 1.06). Gleichermaßen wirken sich strukturelle, chemische Unterschiede als auch der eingesetzte Anteil auf die bescheunigende Wirkung in einer Epoxidharz-Härter-Mischung aus.

### Beispiel 2

### Latenz bei 25°C

Die Harzformulierungen der allg. Zusammensetzung
*Epikote 828 (100 Teile) : DCD (6,5 Teile) : Beschleuniger (x Teile)*
wurden entsprechend der Tabellen 2a und 2b wie eingangs beschrieben angefertigt und ausgetestet.

**Tabelle 2a: Latenz bei 25°C in Stunden (h) oder Tagen (d) (nicht erfindungsgemäß)**

| | | Prozentualer Anstieg der Viskosität als Maß der Latenz | | | |
|---|---|---|---|---|---|
| Zusammensetzung | Beschleuniger (Teile) | 20% | 50% | 100% | 300% |
| | | | | | |
| 1.01 | UR500 (1,0 Teile) | 44 d | 57 d | 65 d | 80 d |
| 1.02 | UR500 (3,0 Teile) | 36 d | 48 d | 58 d | 71 d |
| 1.03 | UR500 (5,0 Teile) (5,0 Teile) | 22 d | 43 d | 54 d | 62 d |
| | | | | | |
| 1.04 | PI-FF (1,0 Teile) | 14 h = 0,58 d | 28 h = 1,17 d | 68 h = 2,83 d | 90 h = 3,75 d |
| 1.05 | PI-FF (3,0 Teile) | 17 h = 0,71 d | 19 h = 0,79 d | 21 h = 0,88 d | 27 h = 1,13 d |

**Tabelle 2b: Latenz bei 25°C in Stunden (h) oder Tagen (d) (erfindungsgemäß)**

| | | Prozentualer Anstieg der Viskosität als Maß der Latenz | | | |
|---|---|---|---|---|---|
| Zusammensetzung | Beschleuniger (Teile) | 20% | 50% | 100% | 300% |
| | | | | | |
| 1.20 | Ac-DMS (1,0 Teile) | 16 d | 26 d | 34 d | 46 d |
| 1.21 | Ac-DMS (3,0 Teil) | 6 d | 12 d | 17 d | 26 d |
| 1.22 | Ac-DMS (5,0 Teil) | 4 d | 7 d | 11 d | 20 d |
| | | | | | |
| 1.23 | MEK-DMS (1,0 Teile) | 23 d | 32 d | 40 d | 54 d |
| 1.24 | MEK-DMS (3,0 Teil) | 15 d | 22 d | 28 d | 38 d |
| 1.25 | MEK-DMS (5,0 Teil) | 6 d | 12 d | 19 d | 32 d |
| | | | | | |
| 1.26 | MIBK-DMS (1,0 Teile) | 18 d | 31 d | 46 d | 66 d |
| 1.27 | MIBK-DMS (3,0 Teil) | 14 d | 21 d | 29 d | 46 d |
| 1.28 | MIBK-DMS (5,0 Teil) | 5 d | 9 d | 17 d | 29 d |
| | | | | | |
| 1.29 | CyPn-DMS (1,0 Teile) | 32 d | 66 d | 115 d | > 140 d |
| 1.30 | CyPn-DMS (3,0 Teil) | 38 d | 71 d | 111 d | > 140 d |
| 1.31 | CyPn-DMS (5,0 Teil) | 10 d | 26 d | 60 d | > 140 d |
| | | | | | |
| 1.32 | CyHx-DMS (1,0 Teile) | 40 d | 100 d | > 150 d | - |
| 1.33 | CyHx-DMS (3,0 Teil) | 14 d | 60 d | 110 d | > 150 d |
| 1.34 | CyHx-DMS (5,0 Teil) | 10 d | 20 d | 42 d | 103 d |
| | | | | | |
| 1.35 | AcPh-DMS (1,0 Teile) | 30 d | 70 d | 120 d | > 150 d |
| 1.36 | AcPh-DMS (3,0 Teil) | 18 d | 33 d | 48 d | 72 d |
| 1.37 | AcPh-DMS (5,0 Teil) | 3 d | 9 d | 17 d | 35 d |
| | | | | | |
| 1.38 | Ac-DES (1,0 Teile) | 8 d | 20 d | 30 d | 37 d |
| 1.39 | Ac-DES (3,0 Teil) | 6 d | 14 d | 18 d | 25 d |
| 1.40 | Ac-DES (5,0 Teil) | 4 d | 9 d | 13 d | 16 d |
| | | | | | |
| 1.41 | AcPh-DES (1,0 Teile) | 38 d | 63 d | 91 d | > 150 d |
| 1.42 | AcPh-DES (3,0 Teil) | 13 d | 44 d | 57 d | 80 d |
| 1.43 | AcPh-DES (5,0 Teil) | 5 d | 22 d | 44 d | 62 d |
| | | | | | |

Die erfindungsgemäßen Beschleuniger (I) sind entsprechend den Beispielen 1.20 bis 1.43 in der getesteten Harzformulierung latenter als die Uronvergleiche 1.01 bis 1.03, jedoch wesentlich latenter als die ImidazolDerivate der Beispiele 1.04 bis 105.

### Beispiel 3

### Latenz bei 60 °C

Die Harzformulierungen der allg. Zusammensetzung
*Epikote 828 (100 Teile) : DCD (6,5 Teile) : Beschleuniger (x Teile)*
wurden entsprechend der Tabellen 3a und 3b wie eingangs beschrieben angefertigt und ausgetestet.

**Tabelle 3a: Latenz bei 60°C in Stunden (h) (nicht erfindungsgemäß)**

| | | Prozentualer Anstieg der Viskosität als Maß der Latenz | | | |
|---|---|---|---|---|---|
| Zusammensetzung | Beschleuniger (Teile) | 20% | 50% | 100% | 300% |
| | | | | | |
| 1.01 | UR500 (1,0 Teile) | 6,75 h | 9,0 h | 10,75 h | 13,5 h |
| 1.02 | UR500 (3,0 Teile) | 4,0 h | 6,75 h | 8,75 h | 12,0 h |
| | | | | | |
| 1.04 | PI-FF (1,0 Teile) | 2,25 h | 3,0 h | 3,0 h | 4,5 h |
| | | | | | |

**Tabelle 3b: Latenz bei 60°C in Stunden (h) (erfindungsgemäß)**

| | | Prozentualer Anstieg der Viskosität als Maß der Latenz | | | |
|---|---|---|---|---|---|
| Zusammensetzung | Beschleuniger (Teile) | 20% | 50% | 100% | 300% |
| | | | | | |
| 1.20 ( | Ac-DMS (1,0 Teile) | 3,0 h | 5,0 h | 6,5 h | 9,0 h |
| 1.21 | Ac-DMS (3,0 Teil) | 1,5 h | 2,5 h | 3,5 h | 5,0 h |
| | | | | | |
| 1.23 | MEK-DMS (1,0 Teile) | 3,5 h | 5,5 h | 7,0 h | 9,5 h |
| 1.24 | MEK-DMS (3,0 Teil) | 2,0 h | 2,75 h | 3,5 h | 4,5 h |
| | | | | | |
| 1.26 | MIBK-DMS (1,0 Teile) | 4,5 h | 6,0 h | 7,25 h | 9,25 h |
| 1.27 | MIBK-DMS (3,0 Teil) | 3,5 h | 4, 5 h | 5,0 h | 6,0 h |
| | | | | | |
| 1.29 | CyPn-DMS (1,0 Teile) | 6,5 h | 9,0 h | 11,0 h | 15,0 h |
| 1.30 | CyPn-DMS (3,0 Teil) | 1,0 h | 2,0 h | 4,5 h | 9,25 h |
| | | | | | |
| Zusammensetzung | Beschleuniger (Teile) | 20% | 50% | 100% | 300% |
| 1.32 | AcPh-DMS (1,0 Teile) | 6,5 h | 9,0 h | 11,0 h | 14,0 h |
| 1.33 | AcPh-DMS (3,0 Teil) | 2,0 h | 4,5 h | 6,5 h | 9,5 h |
| 1.34 | AcPh-DMS (5,0 Teil) | 1,0 h | 2,5 h | 4,0 h | 6,5 h |
| | | | | | |

Die erfindungsgemäßen Beschleuniger (I) sind entsprechend den Beispielen 1.20 bis 1.34 in der getesteten Harzformulierung besser als der Uronvergleich Dyhard 500 (Beispiele 1.01 - 1.03). Gegenüber dem Imidazol-Derivat (Beispiel 1.07) sind die neuen Semicarbazone (I) wesentlich latenter (Beispiele 1.20-1.34).

## Patentansprüche

1. Verwendung von mindestens einem Semicarbazon der allgemeinen Formel (I) 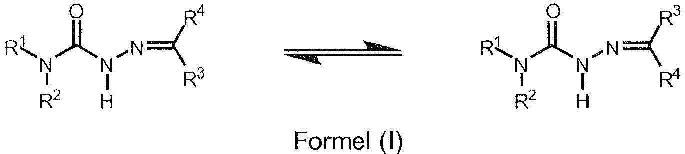 wobei
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl,
R³, R⁴= gleichzeitig oder unabhängig voneinander H, verzweigter oder linearer Alkyl-Rest, Cycloalkyl-Rest, Alkylaryl-Rest, Aryl-Rest, Heteroaryl-Rest oder CN;
oder
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl-Rest,
R³ und R⁴ = Alkylen mit -(CH₂)ₙ- und 2 ≤ n ≤ 11 bedeuten,
als Härtungsbeschleuniger zum Härten von Epoxidharz-Zusammensetzungen mittels hitzeaktivierbarer Härter.

2. Verwendung nach Anspruch 1,
**dadurch gekennzeichnet,**
**dass** der hitzeaktivierbare Härter aus der Gruppe der Amine, Amide, Guanidine, Biguanide, Carbonsäureanhydride oder Polyphenole ausgewählt wird.

3. Verwendung nach Anspruch 1 oder 2,
**dadurch gekennzeichnet,**
**dass** als hitzeaktivierbarer Härter Dicyandiamid eingesetzt wird.

4. Verwendung nach mindestens einem der vorgenannten Ansprüche 1 bis 3,
**dadurch gekennzeichnet,**
**dass** das Semicarbazon oder Mischungen der Semicarbazone in einer Menge von 0,1 bis 15 Gew.-%, bezogen auf die Epoxidharz-Zusammensetzung, eingesetzt werden.

5. Verwendung nach mindestens einem der Ansprüche 1 bis 4,
**dadurch gekennzeichnet,**
**dass** das Semicarbazon oder Mischungen der Semicarbazone in einem Verhältnis von 0,1 bis 15 Teile, bezogen auf 100 Teile Epoxidharz, eingesetzt werden.

6. Epoxidharz-Zusammensetzung umfassend
a) ein Epoxidharz mit mindestens einer reaktiven Epoxidgruppe,
b) mindestens einen hitzeaktivierbaren Härter,
c) mindestens ein Semicarbazon der allgemeinen Formel (I) als Härtungsbeschleuniger 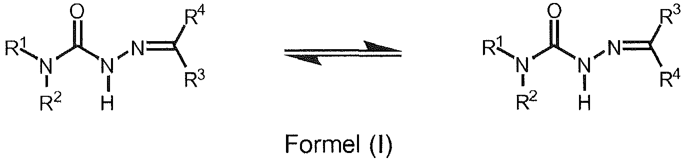 wobei
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl,
R³, R⁴= gleichzeitig oder unabhängig voneinander H, verzweigter oder linearer Alkyl-Rest, Cycloalkyl-Rest, Alkylaryl-Rest, Aryl-Rest, Heteroaryl-Rest oder CN;
oder
R¹ = verzweigter oder linearer Alkyl-Rest, Cycloalkyl-Rest, Aryl-Rest oder Alkylaryl-Rest,
R² = H, verzweigter oder linearer Alkyl-Rest, Cycloalkyl-Rest, Aryl-Rest oder Alkylaryl-Rest,
R³ und R⁴ = Alkylen mit -(CH₂)ₙ- und 2 ≤ n ≤ 11
bedeuten.

7. Epoxidharz-Zusammensetzung nach Anspruch 6,
**dadurch gekennzeichnet,**
**dass**
R¹ = Methyl, Ethyl, Benzyl oder Phenyl,
R² = H, Methyl, Ethyl, Benzyl oder Phenyl,
R³, R⁴ = gleichzeitig oder unabhängig voneinander H, Methyl, Ethyl, Propyl, Isopropyl, Butyl, Isobutyl, Benzyl oder Phenyl,
oder
R¹ = Methyl, Ethyl, Benzyl oder Phenyl,
R² = H, Methyl, Ethyl, Benzyl oder Phenyl,
R³ und R⁴ = Alkylen mit -(CH₂)ₙ- und 2 ≤ n ≤ 6
bedeuten.

8. Epoxidharz-Zusammensetzung nach Anspruch 7 oder 8,
**dadurch gekennzeichnet,**
**dass** das Epoxidharz ausgewählt wird aus der Gruppe Glycidylpolyether von 2,2-Bis(4-hydroxyphenyl)-propan (Bisphenol A), das mit Brom substituierte Derivat (Tetrabrombisphenol A) davon, Glycidylpolyether von 2,2-Bis(4-hydroxyphenyl)methan (Bisphenol F) und Glycidylpolyether von Novolac-Harzen sowie Anilin oder substituierten Anilinen, vorzugsweise P-Aminophenol oder 4,4'-Diaminodiphenylmethane.

9. Epoxidharz-Zusammensetzung nach einem der Ansprüche 6 bis 8,
**dadurch gekennzeichnet,**
**dass** als hitzeaktivierbarer Härter Biguanide, vorzugsweise ortho-Tolylbiguanid (OTB), Methylendianilin (MDA, DDM), para-Aminocyclohexylmethan (PACM), 3,3'- oder 4,4'-Diaminodiphenylsulfon (DDS), Polyetheramine, Dicyandiamid (DCD), Dihydrazide von Adipin- oder Sebazinsäure, Anhydride der Pyromellit-, Trimellit- oder Phthalsäure, Phenol- oder Kresolnovolacke, oder Mischungen hiervon enthalten sind.

## Claims

1. Use of at least one semicarbazone of the general formula (I), 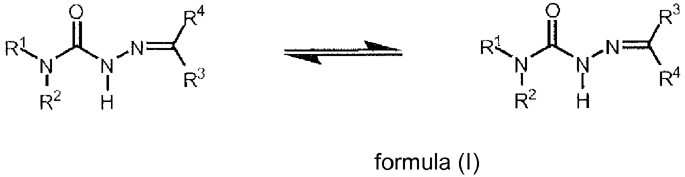 where
R¹= a branched or linear alkyl functional group, cycloalkyl functional group, aryl functional group or alkylaryl functional group,
R² = H, a branched or linear alkyl functional group, cycloalkyl functional group, aryl functional group or alkylarylfunctional group,
R³, R⁴= simultaneously or independently of one another, H, a branched or linear alkyl functional group, cycloalkyl functional group, alkylaryl functional group, aryl functional group, heteroaryl functional group or CN;
or
R¹ = a branched or linear alkyl functional group, cycloalkyl functional group, aryl functional group or alkylaryl functional group,
R² = H, a branched or linear alkyl functional group, cycloalkyl functional group, aryl functional group or alkylaryl functional group,
R³ and R⁴ = alkylene having -(CH₂)ₙ- and 2 ≤ n ≤ 11,
as a curing accelerator for curing epoxy resin compositions by means of heat-activatable curing agents.

2. Use according to claim 1, **characterised in that** the heat-activatable curing agent is selected from the group consisting of amines, amides, guanidines, biguanides, carboxylic acid anhydrides or polyphenols.

3. Use according to either claim 1 or claim 2, **characterised in that** dicyandiamide is used as the heat-activatable curing agent.

4. Use according to at least one of preceding claims 1 to 3, **characterised in that** the semicarbazone or mixtures of the semicarbazones is/are used in an amount of from 0.1 to 15 wt.%, based on the epoxy resin composition.

5. Use according to at least one of claims 1 to 4, **characterised in that** the semicarbazone or mixtures of the semicarbazones is/are used in a ratio of from 0.1 to 15 parts, based on 100 parts epoxy resin.

6. Epoxy resin composition comprising
a) an epoxy resin having at least one reactive epoxy group,
b) at least one heat-activatable curing agent,
c) at least one semicarbazone of the general formula (I) as a curing accelerator 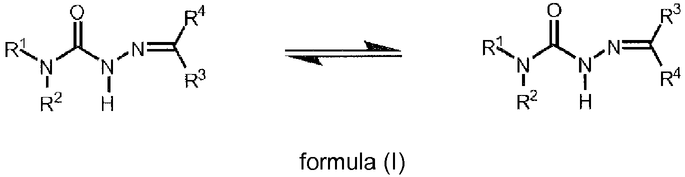 where
R¹ = a branched or linear alkyl functional group, cycloalkyl functional group, aryl functional group or alkylaryl functional group,
R² = H, a branched or linear alkyl functional group, cycloalkyl functional group, aryl functional group or alkylaryl functional group,
R³, R⁴ = simultaneously or independently of one another, H, a branched or linear alkyl functional group, cycloalkyl functional group, alkylaryl functional group, aryl functional group, heteroaryl functional group or CN;
or
R¹ = a branched or linear alkyl functional group, cycloalkyl functional group, aryl functional group or alkylaryl functional group,
R² = H, a branched or linear alkyl functional group, cycloalkyl functional group, aryl functional group or alkylaryl functional group,
R³ and R⁴ = alkylene having - (CH₂)ₙ- and 2 ≤ n ≤ 11.

7. Epoxy resin composition according to claim 6, **characterised in that**
R¹ = methyl, ethyl, benzyl or phenyl,
R² = H, methyl, ethyl, benzyl or phenyl,
R³, R⁴ = simultaneously or independently of one another, H, methyl, ethyl, propyl, isopropyl, butyl, isobutyl, benzyl or phenyl,
or
R¹ = methyl, ethyl, benzyl or phenyl,
R² = H, methyl, ethyl, benzyl or phenyl,
R³ and R⁴ = alkylene having - (CH₂)ₙ- and 2 ≤ n ≤ 6.

8. Epoxy resin composition according to either claim 7 or claim 8, **characterised in that** the epoxy resin is selected from the group consisting of glycidyl polyether of 2, 2-bis(4-hydroxyphenyl) propane (bisphenol A), the derivative thereof substituted with bromine (tetrabromobisphenol A), glycidyl polyether of 2,2-bis(4-hydroxyphenyl)methane (bisphenol F) and glycidyl polyether of novolak resins and aniline or substituted anilines, preferably P-aminophenol or 4,4'-diaminodiphenylmethane.

9. Epoxy resin composition according to any of claims 6 to 8, **characterised in that** biguanides, preferably ortho-tolyl biguanide (OTB), methylenedianiline (MDA, DDM), para-amino cyclohexyl methane (PACM), 3,3'- or 4,4'-diaminodiphenyl sulfone (DDS), polyetheramines, dicyandiamide (DCD), adipic acid or sebacic acid dihydrazides, pyromellitic, trimellitic or phthalic anhydrides, phenol novolaks or cresol novolaks or mixtures thereof, are contained as the heat-activatable curing agent.

## Revendications

1. Utilisation d'au moins une semicarbazone de formule générale (I) 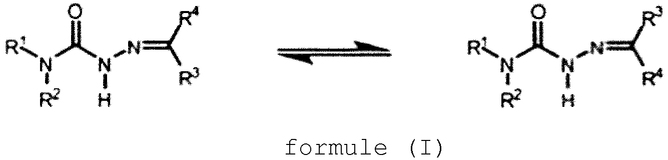 où
R¹ = radical alkyle, radical cycloalkyle, radical aryle ou radical alkylaryle, ramifié ou linéaire,
R² = H, radical alkyle, radical cycloalkyle, radical aryle ou alkylaryle, ramifié ou linéaire,
R³, R⁴ = simultanément ou indépendamment les uns des autres, H, radical alkyle, radical cycloalkyle, radical alkylaryle, radical aryle, radical hétéroaryle ou CN, ramifié ou linéaire;
ou
R¹ = radical alkyle, radical cycloalkyle, radical aryle ou radical alkylaryle, ramifié ou linéaire,
R² = H, radical alkyle, radical cycloalkyle, radical aryle ou radical alkylaryle, ramifié ou linéaire,
R³ et R⁴ = alkylène avec -(CH₂)ₙ- et 2 ≤ n ≤ 11, en tant qu'accélérateur de durcissement pour le durcissement de compositions de résine époxyde au moyen d'un durcisseur activable par la chaleur.

2. Utilisation selon la revendication 1,
**caractérisée en ce que**
le durcisseur activable par la chaleur est sélectionné dans le groupe des amines, amides, guanidines, biguanides, anhydrides d'acides carboxyliques ou polyphénols.

3. Utilisation selon la revendication 1 ou 2,
**caractérisée en ce que**
du dicyandiamide est utilisé en tant que durcisseur activable par la chaleur.

4. Utilisation selon au moins l'une des revendications précédentes 1 à 3,
**caractérisée en ce que**
la semicarbazone ou des mélanges de semicarbazone sont utilisés à raison d'une quantité de 0,1 à 15% en poids rapportée à la composition de résine époxyde.

5. Utilisation selon au moins l'une des revendications précédentes 1 à 4,
**caractérisée en ce que**
la semicarbazone ou des mélanges de semicarbazone sont utilisés à raison d'un rapport de 0,1 à 15 parties, rapporté à 100 parties de résine époxyde.

6. Composition de résine époxyde, comprenant
a) une résine époxyde avec au moins un groupe époxyde réactif,
b) au moins un durcisseur activable par la chaleur,
c) au moins une semicarbazone de formule générale (I) en tant qu'accélérateur de durcissement 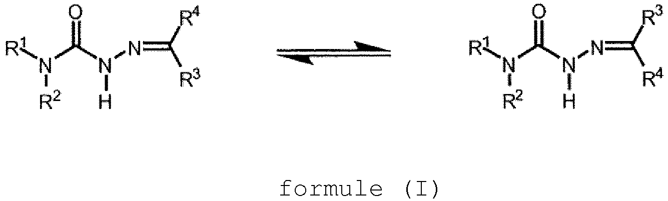 où
R¹ = radical alkyle, radical cycloalkyle, radical aryle ou radical alkylaryle, ramifié ou linéaire,
R² = H, radical alkyle, radical cycloalkyle, radical aryle ou alkylaryle, ramifié ou linéaire,
R³, R⁴ = simultanément ou indépendamment les uns des autres, H, radical alkyle, radical cycloalkyle, radical alkylaryle, radical aryle, radical hétéroaryle ou CN, ramifié ou linéaire;
ou
R¹ = radical alkyle, radical cycloalkyle, radical aryle ou radical alkylaryle, ramifié ou linéaire,
R² = H, radical alkyle, radical cycloalkyle, radical aryle ou radical alkylaryle, ramifié ou linéaire,
R³ et R⁴ = alkylène avec -(CH₂)ₙ- et 2 ≤ n ≤ 11.

7. Composition de résine époxyde selon la revendication 6,
**caractérisée en ce que**
R¹ = méthyle, éthyle, benzyle ou phényle,
R² = H, méthyle, éthyle, benzyle ou phényle,
R³, R⁴ = simultanément ou indépendamment les uns des autres, H, méthyle, éthyle, propyle, isopropyle, butyle, isobutyle, benzyle ou phényle,
ou
R¹ = méthyle, éthyle, benzyle ou phényle,
R² = H, méthyle, éthyle, benzyle ou
phényle,
R³ et R⁴ = alkylène avec- (CH₂)ₙ- et 2 ≤ n ≤ 6.

8. Composition de résine époxyde selon la revendication 7 ou 8,
**caractérisée en ce que**
la résine époxyde est sélectionnée dans le groupe glycidyl polyéther de 2,2-bis(4-hydroyphényl)-propane (bisphénol A), son dérivé substitué par du brome (tétrabromobisphénol A), glycidyl polyéther de 2,2-bis(4-hydroxyphényl)méthane (bisphénol F) et glycidyl polyéther de résines novolaques ainsi que aniline ou anilines substituées, de préférence p-aminophénol ou 4,4'-diaminodiphénylméthane.

9. Composition de résine époxyde selon l'une des revendications 6 à 8,
**caractérisée en ce que**
le durcisseur activable par la chaleur contient des biguanides, de préférence ortho-tolylbiguanide (OTB), méthylène dianiline (MDA, DDM), para-aminocyclohexylméthane (PACM), 3,3'- ou 4,4'-diaminodiphénylsulfone (DDS), polyétheramines, dicyandiamide (DCD), dihydrazides d'acide adipinique ou sébazinique, anhydrides de l'acide pyromellitique, triméllitique ou phtalique, novolaques phénoliques ou crésoliques, ou des mélanges de ceux-ci.
